# EUROPEAN PATENT APPLICATION

(11) **EP 3 896 310 A1**
(43) Date of publication of application: **20.10.2021**
(21) Application number: 19895341.6
(22) Date of filing: 02.12.2019
(51) Int. Cl.: F16H 57/03, F16H 57/04

(54) **VEHICLE DRIVE DEVICE**

(30) Priority: 14.12.2018 JP 2018234010
(71) Applicant: NTN Corporation, Osaka-shi, Osaka 550-0003 (JP)
(72) Inventor: MYOUKI, Aiko, Iwata-shi, Shizuoka 438-8510 (JP)
(74) Representative: Grünecker Patent- und Rechtsanwälte PartG mbB
(86) International application number: PCT/JP2019/046974
(87) International publication number: WO 2020/121863

(57) **Abstract**

An object of the present invention is to provide a vehicle driving apparatus which includes split housing members each having a pipeline formed integrally therewith, and is capable of keeping mating surfaces of the pipeline securely held even when an external force acts on the split housing members, to thereby prevent pressure leakage and fluid leakage from connecting portions of the pipeline. A housing 2 is split into housing members 2a, 2b, 2c, each including a pipeline 28 which is formed integrally therewith and provided via ribs 31 at a position connecting two fasteners which fasten mutually adjacent two of the housing members 2a, 2b, 2c. Therefore, mating surfaces of the pipeline 28 are firmly held even when an external force acts on the split housing members.

## Description

### TECHNICAL FIELD

The present invention relates to a vehicle driving apparatus which includes a vehicle driving mechanism housed in a housing that is split into a plurality of housing members each formed, integrally therewith, with pipelines serving as an oil path for supplying a lubricant oil to lubrication targets, a water path for a coolant, etc.

### BACKGROUND ART

It is common that a vehicle driving apparatus for automobiles and the like has pipelines serving as an oil path for supplying a lubricant oil to lubrication targets, a water path for a coolant, etc.

It is a conventional arrangement to form the pipelines integrally with the housing which houses the driving mechanism of the vehicle in order to decrease the number of parts, the number of assembling steps and the size of the vehicle driving apparatus (Patent Literature 1).

### CITATION LIST

### PATENT LITERATURE

Patent Literature 1: JP H11-270642 A

### SUMMARY OF INVENTION

### TECHNICAL PROBLEM

However, the housing which houses the driving mechanism of the driving apparatus of the vehicle such as an automobile is split into a plurality of housing members to facilitate assembling process, for example, of internal parts. The split, two mutually adjacent housing members are assembled with each other by being abutted to each other on their split surfaces and fastened with a plurality of fasteners such as bolts.

The housing, like the one described above, which is split into a plurality of housing members, has its pipelines also formed in the split housing members.

Therefore, for any of the pipelines which runs across a plurality of housing members and is split at the split surfaces of the housing members, there must be some arrangement to prevent pressure leakage from the pipeline at the split surfaces. A specific example may be providing a seal member in between. This is especially so for the housing of an in-wheel motor driving device which is installed in a wheel. In this case, the housing is subjected to constant elastic deformation caused by input from road surface. It is important, therefore, to provide an arrangement for preventing leaking and/or pressure leakage from the pipeline at the split surfaces when the mating surfaces of the housing members are subjected to external forces in a direction that the surfaces are twisted or pulled apart from each other, such as when the vehicle is turning, making a back and forth movement, and driving over a step.

An example of the arrangement may be to fit mutual connecting portions of the pipeline by means of mutual insertion, with one end being inserted into the inner diameter of the other while the other end inserted around the outer diameter of the first one, using an O-ring, for example, to provide sealing. This makes it possible to decrease chances for pressure leakage, but fitting the pipeline's jointing portions by means of mutual insertion requires a high level of positional accuracy between the connecting portions of the pipeline.

However, while positional accuracy is important for driving shafts such as a motor shaft, a gear shaft and the like when they are mounted to the housing members because their positional accuracy affects noise, vibration, efficiency, and life of the driving apparatus, the pipeline which runs across two housing members does work, even with some positional errors, as long as it is continuous.

Therefore, in the pipeline which runs across two housing members, it is more important, than the positional accuracy, that the mating surfaces of the pipeline are securely held even when an external force acts on the split housing members.

It is therefore an object of the present invention to provide an arrangement for the mating surfaces of the pipeline to be securely held even when an external force acts on the split housing members.

### SOLUTION TO PROBLEM

In order to solve the above-described problems, the present invention provides a vehicle driving apparatus which includes a housing for a vehicle driving mechanism; the housing is split into a plurality of housing members; the split, mutually adjacent housing members are abutted to each other on their split surfaces, and fastened with a plurality of fasteners; the split, mutually adjacent housing members are formed, integrally therewith, with a pipeline running across the mutually adjacent housing members. In this arrangement, the pipeline formed integrally with the housing members is formed via a rib, at a position connecting two of the fasteners which fasten the mutually adjacent housing members.

The pipeline may be positioned more closely to one of the two fasteners which fasten the mutually adjacent housing members.

The rib may have a lower height than that of the split surface of the housing member.

The driving mechanism of the vehicle housed in the housing includes a motor and a speed reducer for example.

### ADVANTAGEOUS EFFECTS OF INVENTION

As described, according to the present invention, by providing the pipeline which is formed integrally with the housing members that are provided by split portions of the housing, via the rib and at a position connecting two fasteners fastening mutually adjacent two of the housing members, mating surfaces of the pipeline are firmly held even when an external force acts on the split housing members. Since the invention also improves machining accuracy of the mating surfaces, the invention makes it possible to prevent pressure leakage (fluid leakage) from connecting portions of the pipeline.

### BRIEF DESCRIPTION OF DRAWINGS

Fig. 1 is an external view of an in-wheel motor driving device according to an embodiment of the present invention when viewed from a front.
Fig. 2 is a side view of the in-wheel motor driving device in Fig. 1 when viewed from of an inboard side of the vehicle.
Fig. 3 is a simplified view, showing a configuration of the in-wheel motor driving device in Fig. 1.
Fig. 4 is a simplified side view of a housing member of the in-wheel motor driving device in Fig. 1.
Fig. 5 is a simplified perspective view of the housing member in Fig. 4.
Fig. 6 is a simplified side view of anther embodiment of the housing member of the in-wheel motor driving device.
Fig. 7 is a simplified side view of still another embodiment of the housing member of the in-wheel motor driving device.
Fig. 8 is a simplified partial side view of still another embodiment of the housing member of the in-wheel motor driving device.
Fig. 9 is a simplified partial side view, showing an example of an abutting portion of a pipeline provided in the housing member of the in-wheel motor driving device.
Fig. 10 is a simplified partial side view, showing another example of the abutting portion of a pipeline provided in the housing member of the in-wheel motor driving device.

### DESCRIPTION OF EMBODIMENTS

Hereinafter, description will be made for embodiments of the present invention, with reference to the attached drawings.

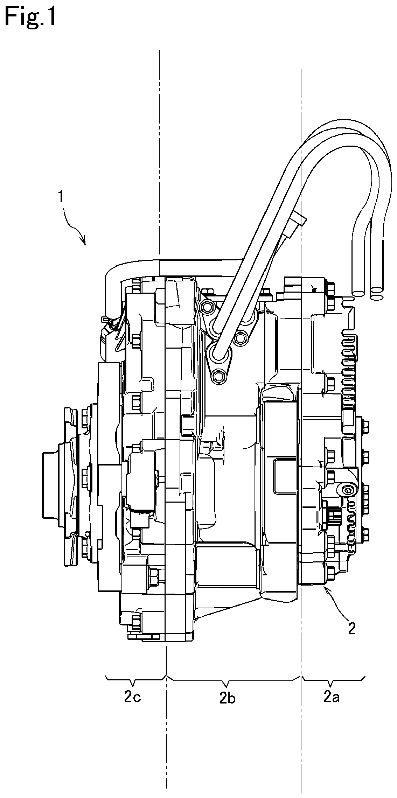

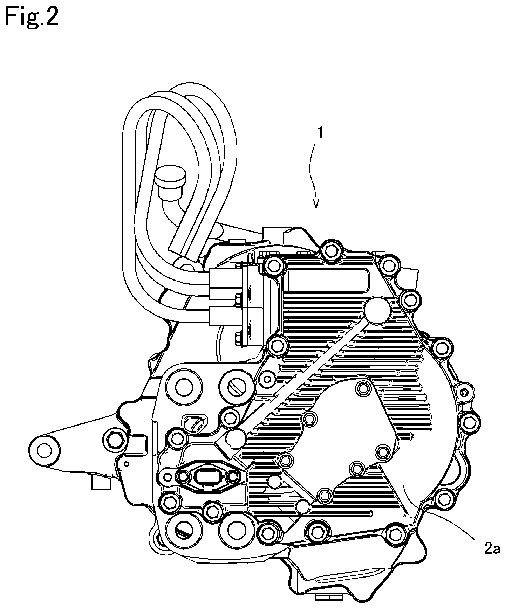

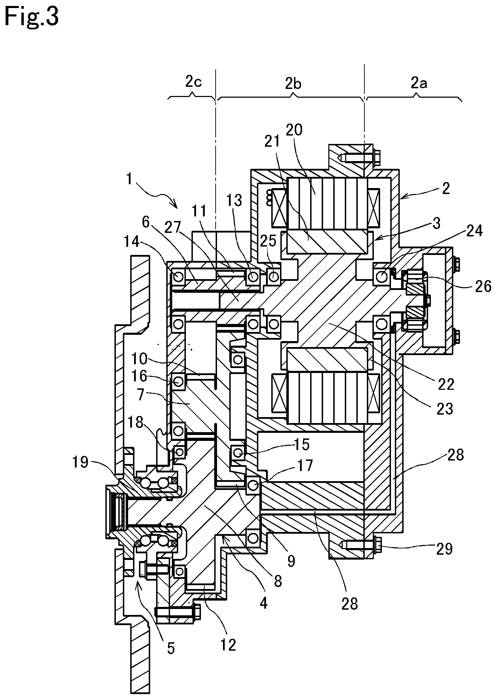

Fig. 1 is an external view of an in-wheel motor driving device 1 according to an embodiment of the present invention when viewed from a front; Fig. 2 is a side view thereof when viewed from a center of the car body; and Fig. 3 is a simplified sectional view, showing a driving mechanism housed in a housing 2.

As shown in Fig. 1, the housing 2 is split axially into three housing members 2a, 2b, 2c.

As shown in Fig. 3, the in-wheel motor driving device 1 includes an electric motor 3 which drives a wheel, a parallel shaft gear speed reducer 4 which decreases rotation of the electric motor 3 and then makes an output, and a wheel bearing 5 which transmits the output from the parallel shaft gear speed reducer 4 to the driving wheel. It should be noted here that in the present embodiment, the parallel shaft gear speed reducer 4 is utilized as an example. However, the speed reducer may be provided by other types, such as a planetary gear speed reducer and a cycloid reduction gear system.

The electric motor 3 and the parallel shaft gear speed reducer 4 are housed in the housing 2, and installed inside a wheel housing (not illustrated) of an electric vehicle.

The parallel shaft gear speed reducer 4 is constituted by a first gear 6 which works as an input gear, a second gear 7 which works as an intermediate gear, and a third gear 8 which works as an output gear. The second gear 7 has an inboard-side large-diameter teeth portion 9 and an outboard-side small-diameter teeth portion 10, coaxially with each other.

The parallel shaft gear speed reducer 4 decreases rotating speed of the electric motor 3 at a predetermined reduction ratio, using a teeth portion 11 of the first gear 6 meshing with the large-diameter teeth portion 9 of the second gear 7, and the small-diameter teeth portion 10 of the second gear 7 meshing with a large-diameter teeth portion 12 of the third gear 8.

The first gear 6 through the third gear 8 are supported by the housing 2, rotatably via rolling bearings 13 through 18. The third gear 8 is attached to a hub ring 19 of the wheel bearing 5, coaxially by means of spline fitting.

The electric motor 3 is of a radial gap type, having a stator 20 fixed to the housing 2, a rotor 21 disposed radially inside the stator 20 facing thereto with a gap, and a motor rotation shaft 22 disposed radially inside the rotor 21 for rotation integrally with the rotor 21.

The stator 20 is provided by a magnetic core with a coil wound around its outer circumference. The rotor 21 has a permanent magnet or a magnetic body disposed therein. The motor rotation shaft 22 rotates at approximately ten and a few thousand times per minute, being capable of rotating at high speed.

The motor rotation shaft 22 has its inboard-side end supported via a rolling bearing 24, and its outboard-side end supported via a rolling bearing 25, rotatably with respect to the housing 2.

A rotation angle sensor 26 is provided at an inboard-side end of the motor rotation shaft 22, at an inboard-side end portion of the housing 2. The motor rotation shaft 22 has a shaft section 27 extending in an outboard direction and coupled to the first gear 6 of the parallel shaft gear speed reducer 4 coaxially by means of spline fitting.

It should be noted here that in the present embodiment, the radial gap electric motor 3 is utilized as an example. However, any type of motor may be utilized. For example, the motor may be provided by an axial gap electric motor which has a stator fixed to the casing, and a rotor disposed axially inside of the stator to face thereto with a gap.

In the in-wheel motor driving device 1 which has the configuration described thus far, rotation of the electric motor 3 is slowed down by the first gear 6 through the third gear 8 of the parallel shaft gear speed reducer 4, and then transmitted to the wheel bearing 5.

With an overall configuration of the in-wheel motor driving device 1 in this embodiment having been described as the above, hereinafter, detailed description will be given for characteristic configurations thereof.

The housing 2 which houses the electric motor 3 and the parallel shaft gear speed reducer 4 is formed, integrally therewith, with a pipeline 28 which supplies lubricant oil to lubrication targets. As has been described, the housing 2 is split at arbitrary positions to facilitate assembling process, for example, of internal parts, and in the present embodiment, is split axially into three housing members 2a, 2b, 2c.

On the split surfaces of the housing 2, namely, between two joining surfaces of mutually adjacent ones of the housing members 2a, 2b, 2c, there is provided a seal member (not illustrated) for preventing leakage of lubricant oil inside the driving apparatus and/or infiltration of water from outside. The split surface (sealing surface) of the housing 2 is a uniform plane. The seal member is provided by an O-ring or a liquid gasket.

The housing members 2a, 2b, 2c have their outer circumferences fastened to each other with a plurality of bolts 29 (fasteners), and are assembled into the housing 2.

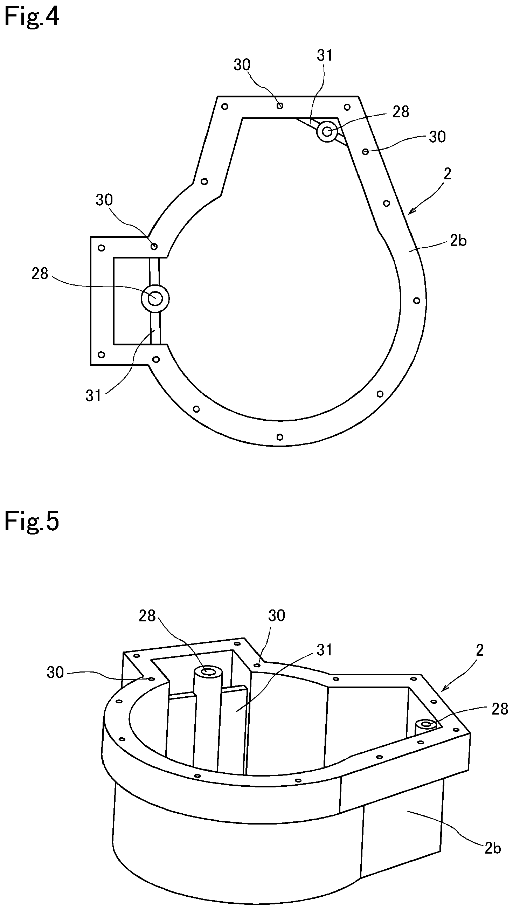

As shown in Fig. 4 and Fig. 5, the pipeline 28 has its mating surfaces located on the same plane as the split surface of the housing members 2a, 2b, 2c. The split surfaces of the housing members 2a, 2b, 2c are formed with a plurality of screw holes 30 (fastening points) for the bolts 29 (fasteners). The pipeline 28 is disposed on a line which connects two of these fastening points, and reinforcing ribs 31 connect the pipeline 28 with the two fastening points.

It is not necessary to form the ribs 31 over the entire length of the pipeline 28. However, since the ribs 31 are for increased support stiffness of the mating surface of the pipeline 28, they are given a rib height which is greater than at least a half of a length of the pipeline 28 while ensuring that there is no interference or the like with other internal parts. Although it is desirable that the height is substantially the same as the length of the pipeline 28, in order to avoid chances that the ribs 31 are contacted by cutting tools when the mating surface of the pipeline 28 is being machined, the ribs 31 should be slightly lower than the mating surface, as shown in Fig. 4 and Fig. 5.

In addition to the ribs 31 formed on the line which connects the two fastening points, there may be another rib which supports the pipeline 28.

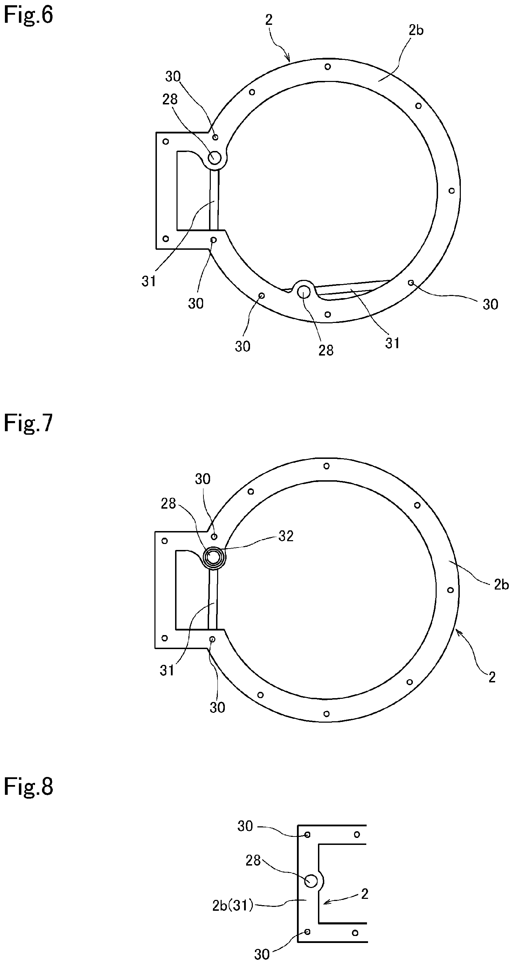

Also, as shown in Fig. 6 or Fig. 7, the mating surfaces of the pipeline 28 may be disposed closely to one of the fastening points. Then, a fastening pressure from the bolts is applied also to the mating surfaces of the pipeline 28, resulting in enhanced contact.

Usually, the fastening points are made on the sealing surface or very closely thereto, so the present arrangement also means that the sealing surface becomes closer to the mating surfaces of the pipeline 28, making it possible to machine both surfaces simultaneously, leading to improved surface accuracy of the mating surface of the pipeline 28 with respect to the sealing surface (= split surface of the housing), resulting in enhanced contact.

Further, a seal member is also provided between the mating surfaces of the pipeline 28. This seal member used for the mating surfaces of the pipeline 28 may be of a different make from that of the seal member used for the sealing surfaces of the housing. For example, the sealing surfaces of the housing may be provided with a liquid gasket, and the mating surfaces of the pipeline 28 which are subject to pumping pressure may be provided with an O-ring 32 which has a greater pressure resistance.

Conversely, the mating surfaces of the pipeline 28 and the sealing surfaces of the housing may be provided with the same type of seal members. This arrangement is advantageous when the mating surfaces of the pipeline 28 are closely positioned to the sealing surfaces since the seal member such as a liquid gasket can be applied to both locations within a single step of application, leading to improved operability and fewer steps in manufacturing process.

In the embodiments described so far, the ribs 31 which reinforce the pipeline 28 are formed to extend from wall surfaces of the housing members 2a, 2b, 2c. Fig. 8 shows an embodiment in which walls of the housing members 2a, 2b, 2c themselves function as the ribs 31 to reinforce the pipeline 28.

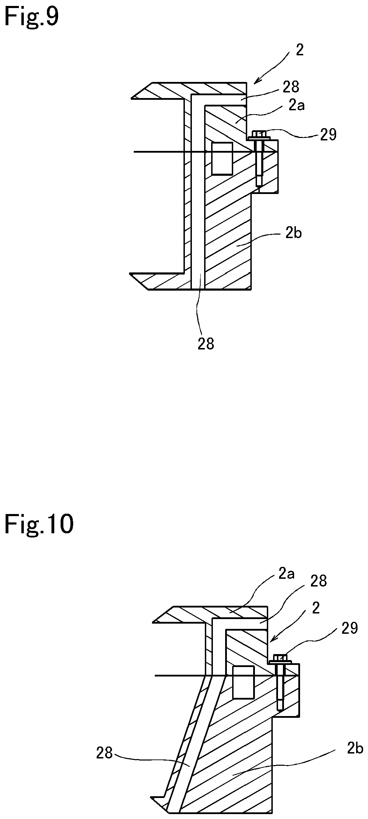

It should be noted here that Fig. 9 and Fig. 10 show mating surfaces of the pipeline 28 and mating surfaces of the housing members 2a, 2b, 2c. As shown in Fig. 9, the pipeline 28 may be formed orthogonal to the mating surfaces, or as shown in Fig. 10, the pipeline 28 may be slanted at the mating surface.

While the pipeline 28 is for supplying a lubricant oil to lubrication targets, the structure of the pipeline 28 provides the same advantages if applied to coolant water paths and the like.

As described, the pipeline 28 which is formed integrally with the housing members 2a, 2b, 2c, is provided via the ribs 31, and at a position connecting two bolts 29(= the screw holes 30) which fasten mutually adjacent two of the housing members 2a, 2b, 2c, whereby the mating surfaces of the pipeline 28 are firmly held even when an external force acts on the split housing members 2a, 2b, 2c, and further, the arrangement leads to an improved level of machining accuracy of the mating surfaces. Therefore, it is possible to prevent pressure leakage (fluid leakage) from connecting portions of the pipeline 28.

The present invention is not limited to any of the embodiments described thus far, and it is obvious that the invention may be modified in many other ways within the scope of the present invention. The scope of the present invention is defined by the CLAIMS and includes all equivalents thereto and any variations therein.

### REFERENCE SIGNS LIST

- 1:: In-wheel motor driving device
- 2:: Housing
- 2a, 2b, 2c:: Housing member
- 3:: Electric motor
- 4:: Parallel shaft gear speed reducer
- 5:: Wheel bearing
- 28:: Pipeline
- 29:: Bolt (Fastener)
- 30:: Screw hole (Fastening point)
- 31:: Rib

## Claims

1. A vehicle driving apparatus comprising a housing for a vehicle driving mechanism, the housing being split into a plurality of housing members; the split, mutually adjacent housing members being abutted to each other on their split surfaces, and fastened with a plurality of fasteners; the split, mutually adjacent housing members being formed, integrally therewith, with a pipeline running across the mutually adjacent housing members; wherein the pipeline formed integrally with the housing members is formed via a rib, and at a position connecting two of the fasteners which fasten the mutually adjacent housing members.

2. The vehicle driving apparatus according to Claim 1, wherein the pipeline is positioned more closely to one of the two fasteners which fasten the mutually adjacent housing members.

3. The vehicle driving apparatus according to Claim 1 or 2, wherein the rib has a lower height than that of the split surface of the housing member.

4. The vehicle driving apparatus according to one of Claims 1 through 3, wherein the vehicle driving mechanism housed in the housing includes a motor and a speed reducer.
